# EUROPEAN PATENT APPLICATION

(11) **EP 4 765 214 A1**
(43) Date of publication of application: **24.06.2026**
(21) Application number: 25223706.0
(22) Date of filing: 16.12.2025
(51) Int. Cl.: H01M 4/04, C01B 25/32, H01M 4/36, H01M 4/58, H01M 4/62, H01M 10/0525

(54) **LITHIUM MANGANESE IRON PHOSPHATE COMPOSITE POSITIVE ELECTRODE MATERIAL, METHOD OF PREPARING THE SAME, POSITIVE ELECTRODE SHEET AND SECONDARY BATTERY**

(30) Priority: 23.12.2024 CN 202411906841
(71) Applicant: AESC Japan Ltd., Yokohama-shi, Kanagawa 220-0012 (JP)
(72) Inventor: YAO, Wenjing, Jiangyin City, Wuxi City, 214443 (CN); KONG, Tianci, Jiangyin City, Wuxi City, 214443 (CN); YANG, Wenlong, Jiangyin City, Wuxi City, 214443 (CN)
(74) Representative: Becker, Eberhard

(57) **Abstract**

A lithium manganese iron phosphate composite positive electrode material, a method of preparing the same, a positive electrode sheet, and a secondary battery belonging to the technical field of battery active materials are provided. The lithium manganese iron phosphate composite positive electrode material includes a component A and a component B. The component A is a Ni/Ti co-doped lithium manganese iron phosphate material, and a chemical formula of the Ni/Ti co-doped lithium manganese iron phosphate material is LiMn_{0.6(1-x-y)}Fe_{0.4(1-x-y)}NiₓTi_{y}PO₄, where 0≤x≤0.05 and 0≤y≤0.05. The component B includes amorphous carbon. The Ni+Ti co-doping strategy effectively addresses the problems such as energy density and capacity decay of the lithium manganese iron phosphate positive electrode material, so lithium manganese iron phosphate is enabled to better exert its advantages of high energy density, enhanced safety, and low costs, and the capacity and cycle stability of the lithium manganese iron phosphate battery are thus improved.

## Description

### BACKGROUND

### Technical Field

The disclosure relates to the technical field of battery active materials, and in particular, relates to a lithium manganese iron phosphate composite positive electrode material, a method of preparing the same, a positive electrode sheet, and a secondary battery.

### Description of Related Art

As people put forward higher requirements for the energy density, safety performance, and cost control of lithium-ion batteries, the development status of positive electrode materials, as the main components of lithium-ion batteries, has also attracted much attention. Although lithium iron phosphate has the advantages of good safety, low costs, and environmental friendliness, it has low platform voltage (to 3.4 V) and low energy density (580 Wh/kg). Nickel cobalt manganese (NCM) or nickel cobalt aluminum (NCA) ternary positive electrode materials have high energy density, but their disadvantages of high costs and poor safety also restrict their development. In comparison, the 4.1 V voltage platform of lithium manganese iron phosphate provides higher energy density than lithium iron phosphate. The stable phosphate radical provides improved safety performance than NCM or NCM ternary positive electrode materials, and the costs are lower than the ternary positive electrode materials using nickel and cobalt. In summary, the lithium manganese iron phosphate positive electrode material is expected to become a competitive positive electrode material for lithium-ion batteries by virtue of its high energy density, high safety, and low costs.

However, although the stable phosphate radical in the lithium manganese iron phosphate positive electrode material ensures thermodynamic stability, it also causes obstruction of metal ion transport, so the intrinsic conductivity of the material is low. The presence of Mn³⁺ in lithium manganese iron phosphate positive electrode material has Jahn-Teller effect, and Mn dissolution during cycling may cause capacity decay during cycling. Further, the Mn platform voltage decay of the lithium manganese iron phosphate positive electrode material may lead to energy density decay, which is also one of the problems that needs to be urgently solved for the lithium manganese iron phosphate positive electrode material.

### SUMMARY

In view of the above-mentioned disadvantages of the related art, the disclosure aims to provide a lithium manganese iron phosphate composite positive electrode material, an electrode sheet, and a method of preparing the same, so as to enhance the structural stability and conductivity of the lithium manganese iron phosphate positive electrode material and improve the capacity and cycle stability of the lithium manganese iron phosphate battery.

To achieve the above and other related purposes, the disclosure provides a lithium manganese iron phosphate composite positive electrode material including a component A and a component B. The component A is a Ni/Ti co-doped lithium manganese iron phosphate material, and a chemical formula of the Ni/Ti co-doped lithium manganese iron phosphate material is LiMn_{0.6(1-x-y)}Fe_{0.4(1-x-y)}NiₓTi_{y}PO₄, where 0≤x≤0.05 and 0≤y≤0.05. The component B includes amorphous carbon.

Further, in the Ni/Ti co-doped lithium manganese iron phosphate material, a ratio of a sum of molar contents of Ni and Ti elements to a sum of molar contents of Mn and Fe is 0.06 to 0.08:0.92 to 0.94.

Further, in the Ni/Ti co-doped lithium manganese iron phosphate material, a molar ratio of Ni to Ti elements is 1:1 to 1.6.

Further, the component B forms a network-like thin film coating the component A.

Further, a mass percentage of the component B in the lithium manganese iron phosphate composite positive electrode material is 1% to 2.5%.

The disclosure further provides a method for preparing a lithium manganese iron phosphate composite positive electrode material, and the method includes the following steps.

A lithium source, a manganese source, an iron source, a nickel source, a titanium source, a phosphorus source, and a carbon source are mixed to form a slurry, and in the slurry, a molar ratio of Li, Mn, Fe, Ni, Ti, and P elements is Li:Mn:Fe:Ni:Ti:P = 1.05:0.6(1-x-y):0.4(1-x-y):x:y:1.

The slurry is dried and sintered to obtain the lithium manganese iron phosphate composite positive electrode material.

Further, in the slurry, a mass of the carbon source is 8% to 12% of a total mass of the lithium source, the manganese source, the iron source, the nickel source, the titanium source, the phosphorus source, and the carbon source.

Further, the lithium source is selected from at least one of lithium carbonate, lithium hydroxide, lithium acetate, or lithium dihydrogen phosphate.

Further, the manganese source is selected from at least one of manganese oxalate, manganese carbonate, trimanganese tetroxide, manganese phosphate, manganese monoxide, or ammonium manganese phosphate.

Further, the iron source is selected from at least one of ferrous oxalate, ferrous pyrophosphate, iron phosphate, ferric oxide, or metallic iron.

Further, the nickel source is selected from at least one of nickel oxide, nickel hydroxide, or trinickel tetroxide.

Further, the titanium source is selected from at least one of titanium dioxide, butyl titanate, or metatitanic acid.

Further, the phosphorus source is selected from at least one of iron phosphate, ammonium dihydrogen phosphate, lithium phosphate, or lithium dihydrogen phosphate.

Further, the carbon source is selected from at least one of glucose, polyethylene glycol, sucrose, citric acid, or graphite.

Further, the sintering is performed under a protective gas atmosphere, a sintering temperature is 650°C to 850°C, and sintering time is 6 h to 12 h.

The disclosure further provides a positive electrode sheet including a positive current collector and a positive active material layer at least on one side of the positive current collector. The positive active material layer includes a positive active material, and the positive active material includes the lithium manganese iron phosphate composite positive electrode material as described above, and/or the lithium manganese iron phosphate composite positive electrode material prepared by the method as described above.

The disclosure further provides a secondary battery including the positive electrode sheet as described above.

As described above, in the disclosure, the lithium manganese iron phosphate composite positive electrode material, the electrode sheet, and the method of preparing the same have the following beneficial effects:
The lithium manganese iron phosphate composite positive electrode material LiMn_{0.6(1-x-y)}Fe_{0.4(1-x-y)}NiₓTi_{y}PO₄/C provided by the disclosure is doped with the metal elements Ni and Ti. The Ni+Ti co-doping can accelerate the ion diffusion rate of the material and suppress the phase separation during the cycle process of lithium manganese iron phosphate, so that the decay rate of the Mn plateau is effectively reduced. Further, the presence of Ni can further increase the stability of the crystal structure of lithium manganese iron phosphate, because Ni²⁺-O-Mn²⁺ has super-exchange interaction, which suppresses the Mn³⁺ valence change and thus slows down the Jahn-Teller effect, so the crystal structure is effectively stabilized. This stable crystal structure helps reduce the capacity decay during the lithium-ion battery cycling, so that a high capacity retention rate is maintained. The Ti doping can reduce the particle size, because the Ti atomic radius is smaller than that of Mn and Fe, so the unit cell volume can be reduced and the particle size can be controlled. This facilitates the ion transport between the particles and increases the uniformity of Mn and Fe in the material, so that the material conductivity is improved. However, the single Ni doping has no obvious effect on the particle size control, and the single Ti doping is also insufficient to stabilize the crystal structure. Therefore, the Ni+Ti co-doping strategy adopted by the disclosure can effectively address the problems such as energy density and capacity decay of the lithium manganese iron phosphate positive electrode material, so that lithium manganese iron phosphate is enabled to better exert its advantages of high energy density, enhanced safety, and low costs, and the capacity and cycle stability of the lithium manganese iron phosphate battery are thus improved.

In the LiMn_{0.6(1-x-y)}Fe_{0.4(1-x-y)}NiₓTi_{y}PO₄/C provided by the disclosure, carbon coating constructs a conductive network between particles, so electronic conductivity is improved.

The LiMn_{0.6(1-x-y)}Fe_{0.4(1-x-y)}NiₓTi_{y}PO₄/C provided the disclosure is prepared by a one-step synthesis method and thus is suitable for large-scale industrial production because the preparation process is simple.

### BRIEF DESCRIPTION OF THE DRAWINGS

FIG. 1 shows an SEM image of a lithium manganese iron phosphate composite positive electrode material LiMn_{0.6}Fe_{0.4}Ni_{0.03}Ti_{0.03}PO₄/C prepared in Example 2 of the disclosure.
FIG. 2 shows a 1C charge-discharge curve chart of batteries prepared based on the lithium manganese iron phosphate composite positive electrode materials prepared in Example 2 and Comparative Examples 1 to 3 of the disclosure.

### DESCRIPTION OF THE EMBODIMENTS

The implementation of the disclosure is illustrated in the following paragraphs by specific embodiments. A person having ordinary skill in the art can easily understand other advantages and effects of the disclosure from the content disclosed in this specification. The disclosure can also be implemented or applied through other different specific implementation ways. The details in this specification can also be modified or changed based on different viewpoints and applications without departing from the spirit of the disclosure.

In the disclosure, unless otherwise specified, the term "plurality" means two or more.

The character "+" indicates an "and" relationship between the preceding and following objects. For instance, A+B means: A and B.

The character "/" indicates an "and" or "or" relationship between the preceding and following objects. For instance, A/B means: A and B, or A or B these two relationships.

The term "and/or" is an associative relationship describing objects, indicating that three relationships may exist. For instance, A and/or B means: A or B, or A and B, these three relationships.

An embodiment of the disclosure provides a lithium manganese iron phosphate composite positive electrode material including a component A and a component B. The component A is a Ni/Ti co-doped lithium manganese iron phosphate material, and a chemical formula of the Ni/Ti co-doped lithium manganese iron phosphate material is LiMn_{0.6(1-x-y)}Fe_{0.4(1-x-y)}NiₓTi_{y}PO₄, where 0≤x≤0.05 and 0≤y≤0.05. The component B includes amorphous carbon.

The lithium manganese iron phosphate composite positive electrode material LiMn_{0.6(1-x-y)}Fe_{0.4(1-x-y)}NiₓTi_{y}PO₄/C provided by the disclosure is doped with metal elements Ni and Ti, and the Ni and Ti elements are uniformly distributed in the lithium manganese iron phosphate particles. The Ni+Ti co-doping may accelerate an ion diffusion rate of the material and suppress phase separation during a cycle process of lithium manganese iron phosphate, so that a decay rate of the Mn plateau is effectively reduced. Specifically, the presence of Ni may further increase stability of a crystal structure of lithium manganese iron phosphate, because Ni²⁺-O-Mn²⁺ has super-exchange interaction, which suppresses Mn³⁺ valence change and thus slows down the Jahn-Teller effect, so the crystal structure is effectively stabilized. This stable crystal structure helps reduce capacity decay during lithium-ion battery cycling, so that a high capacity retention rate is maintained. The Ti doping may reduce a particle size, because the Ti atomic radius is smaller than that of Mn and Fe, so the unit cell volume can be reduced and the particle size can be controlled. This facilitates ion transport between particles and increases the uniformity of Mn and Fe in the material, so that material conductivity is improved. However, the single Ni doping has no obvious effect on the particle size control, and the single Ti doping is also insufficient to stabilize the crystal structure. Therefore, the Ni+Ti co-doping strategy adopted by the disclosure can effectively address problems such as energy density and capacity decay of the lithium manganese iron phosphate positive electrode material, so that lithium manganese iron phosphate is enabled to better exert its advantages of high energy density, enhanced safety, and low costs, and the capacity and cycle stability of a lithium manganese iron phosphate battery are thus improved.

In addition, in the LiMn_{0.6(1-x-y)}Fe_{0.4(1-x-y)}NiₓTi_{y}PO₄/C provided by the disclosure, carbon coating may construct a conductive network between particles, so electronic conductivity is improved.

In some embodiments, in the Ni/Ti co-doped lithium manganese iron phosphate material, a ratio of a sum of molar contents of Ni and Ti elements to a sum of molar contents of Mn and Fe is 0.06 to 0.08:0.92 to 0.94. The lithium manganese iron phosphate material needs a specific amount of Ni+Ti doping to achieve balanced improvement in discharge capacity, capacity retention rate, and other aspects.

In some embodiments, in the Ni/Ti co-doped lithium manganese iron phosphate material, a molar ratio of Ni to Ti elements is 1:1 to 1.6. Under the premise of the same Ni+Ti doping, a higher Ti doping amount may have more advantages in capacity performance.

In some embodiments, the component B uniformly coats the component A in the form of a network-like thin film, and the component B uniformly coats an outer layer of the component A, so the material conductivity is thus further increased.

In some embodiments, a mass percentage of the component B in the lithium manganese iron phosphate composite positive electrode material is 1% to 2.5%. X-ray diffraction (XRD) results show that no graphite characteristic peaks appear in the lithium manganese iron phosphate composite positive electrode material prepared by the method of the disclosure, indicating that a coated carbon layer exists in the form of amorphous carbon. Therefore, a mass percentage of amorphous carbon in the lithium manganese iron phosphate composite positive electrode material of the disclosure is 1% to 2.5%.

Another embodiment of the disclosure provides a method for preparing the lithium manganese iron phosphate composite positive electrode material as described above, and the following steps are included.

A lithium source, a manganese source, an iron source, a nickel source, a titanium source, a phosphorus source, and a carbon source are mixed to form a slurry, and in the slurry, a molar ratio of Li, Mn, Fe, Ni, Ti, and P elements is Li:Mn:Fe:Ni:Ti:P = 1.05:0.6(1-x-y):0.4(1-x-y):x:y:1.

The slurry is dried and sintered to obtain the lithium manganese iron phosphate composite positive electrode material.

The LiMn_{0.6(1-x-y)}Fe_{0.4(1-x-y)}NiₓTi_{y}PO₄/C of the disclosure is prepared by a one-step synthesis method and thus is suitable for large-scale industrial production because the preparation process is simple. By adjusting the raw material feeding ratio, the content of each element in the finished material may be controlled. By testing and detecting the content of each metal element through inductively coupled plasma (ICP), the content and proportion of each metal element in the finished material may be obtained. Herein, it is found that the Li element content in the finished material may be slightly lower than the feeding ratio, which may be due to the light mass of Li, causing a certain amount of lithium loss during the roasting process.

In some embodiments, in the slurry, the mass of the carbon source is 8% to 12% of the total mass of the lithium source, the manganese source, the iron source, the nickel source, the titanium source, the phosphorus source, and the carbon source, so that the mass percentage of the component B in the prepared lithium manganese iron phosphate composite positive electrode material is 1% to 2.5%.

In some embodiments, the lithium source is selected from at least one of lithium carbonate, lithium hydroxide, lithium acetate, or lithium dihydrogen phosphate, but is not limited thereto. The manganese source is selected from at least one of manganese oxalate, manganese carbonate, trimanganese tetroxide, manganese phosphate, manganese monoxide, or ammonium manganese phosphate, but is not limited thereto. The iron source is selected from at least one of ferrous oxalate, ferrous pyrophosphate, iron phosphate, ferric oxide, or metallic iron, but is not limited thereto. The nickel source is selected from at least one of nickel oxide, nickel hydroxide, or trinickel tetroxide, but is not limited thereto. The titanium source is selected from at least one of titanium dioxide, butyl titanate or metatitanic acid, but is not limited thereto. The phosphorus source is selected from at least one of iron phosphate, ammonium dihydrogen phosphate, lithium phosphate, or lithium dihydrogen phosphate, but is not limited thereto. The carbon source is selected from at least one of glucose, polyethylene glycol (PEG), sucrose, citric acid, or graphite, but is not limited thereto.

In some embodiments, the slurry is prepared using water as a dispersion medium, and the water includes but not limited to deionized water, pure water, ultrapure water, purified water, etc.

In some embodiments, the drying method of the slurry is selected from spray drying, but is not limited thereto.

In some embodiments, the sintering is performed under a protective gas atmosphere, a sintering temperature is 650°C to 850°C, and sintering time is 6 h to 12 h. The protective gas includes but not limited to nitrogen, helium, argon, etc.

Another embodiment of the disclosure provides a positive electrode sheet including a positive current collector and a positive active material layer at least on one side of the positive current collector. The positive active material layer includes a positive active material, and the positive active material includes the lithium manganese iron phosphate composite positive electrode material as described above, and/or the lithium manganese iron phosphate composite positive electrode material prepared by the method as described above. Compared with a conventional lithium manganese iron phosphate material, the lithium manganese iron phosphate composite positive electrode material provided by the disclosure has improved structural stability and conductivity, and when used as a positive active material, the capacity and cycle stability of a secondary battery such as a lithium-ion battery may be improved. The positive current collector is, for example, a foil formed after surface treatment of nickel, titanium, aluminum, silver, stainless steel, or carbon, etc. In addition to foil, the positive current collector may also be used in any one or a combination of various forms such as film, mesh, porous, foam, or non-woven fabric. A thickness of the positive current collector is, for example, 8 µm to 15 µm, and a single-side coating thickness of the positive active material layer is, for example, 20 µm to 100 µm. Further, in a specific embodiment, the positive current collector is, for example, aluminum foil, and the thickness of the aluminum foil is, for example, 13 µm, and the single-side coating thickness of the positive active material layer is 50 µm.

In some embodiments, the positive active material layer includes a positive active material, a binder, and a conductive agent, etc., and a mass ratio of the positive active material, the conductive agent, and the binder may be, for example, 90 to 98:1 to 5:1 to 5. Herein, the positive active material may only adopt the lithium manganese iron phosphate composite positive electrode material as described above, and may also include other materials commonly used as positive active materials, for example, materials with the chemical formula Liₓ[Ni_{y}Co_{z}MnₜM_{(1-y-z-t)}]O_{2-δ}, where M is selected from at least one of Cr, Zr, Ca, Mg, Cu, Ti, Al, Mo, W, or Zn, etc., 0.9<x<1.1, 0.65≤y<1.0, 0≤z<0.5, 0≤t<0.5, and 0≤δ≤0.1, including but not limited to lithium nickel manganese oxide, lithium iron phosphate, lithium cobalt oxide, lithium nickel oxide, lithium manganese oxide, lithium nickel manganese oxide, lithium nickel cobalt manganese oxide, or lithium nickel cobalt aluminum oxide, etc. The binder is selected from, for example, any one or more of polyvinylidene fluoride (PVDF), poly(ethylene oxide) (PEO), polyamide (PA), polyacrylonitrile (PAN), polyacrylate, polyvinylether, polymethyl methacrylate (PMMA), ethylene-propylene-diene terpolymer (EPDM), or polyhexafluoropropylene, etc. The conductive agent is selected from, for example, any one or more of conductive carbon black (super P), acetylene black, carbon nanotubes, graphene, etc.

In a specific embodiment, the positive active material is, for example, the lithium manganese iron phosphate composite material as described above, the binder is selected from, for example, polyvinylidene fluoride, and the conductive agent is selected from, for example, conductive carbon black. The positive active material, the conductive agent, and the binder are mixed according to the mass ratio of 90:5:5, for example, an organic solvent is then added, the mixture is stirred under the action of a vacuum mixer until the system becomes uniform, and a positive electrode slurry is obtained. The organic solvent is selected from, for example, N-methylpyrrolidone (NMP). The positive electrode slurry is uniformly coated on the aluminum foil, and after drying in an oven, a positive electrode sheet is obtained through processes such as cold pressing and slitting. In other embodiments, the positive electrode sheet may also be obtained by selecting any other method for forming the positive electrode sheet.

Another embodiment of the disclosure provides a secondary battery including the positive electrode sheet as described above.

In some embodiments, the secondary battery may be, for example, a lithium-ion battery, a sodium-ion battery, a potassium-ion battery, etc., but the disclosure is not limited thereto.

In some embodiments, the secondary battery is a lithium-ion battery including an electrolyte, an outer casing, and a bare cell disposed within the outer casing. The bare cell includes the positive electrode sheet as described above, a negative electrode sheet, and a separator.

In a specific embodiment, a method for preparing the lithium-ion battery includes the following steps. A positive electrode sheet, a separator, and a negative electrode sheet are stacked sequentially to ensure that a separator is provided between any positive electrode sheet and negative electrode sheet. A multi-layered stack is obtained through winding and is placed into the battery outer casing as a bare cell. Finally, an electrolyte is injected into the outer casing once or several times, so that the bare cell is completely immersed in the electrolyte. In other words, the electrolyte is injected and fills the entire internal space of the battery, and the positive electrode sheet, the separator, and the negative electrode sheet are completely wetted in the electrolyte.

In some embodiments, the negative electrode sheet in the above embodiments and/or examples includes a negative current collector and a negative active material layer at least coated on one side surface of the negative current collector. Herein, the negative current collector is selected from, for example, any one of a copper foil current collector, a composite copper foil current collector, a carbon current collector, a foam copper current collector, or a stainless steel current collector, etc. A thickness of the negative current collector is, for example, 8 µm to 15 µm, and a single-side coating thickness of the negative active material layer is, for example, 10 µm to 80 µm. In a specific embodiment, the negative current collector is selected as, for example, copper foil, the thickness of the copper foil is, for example, 13 µm, and the single-side coating thickness of the negative active material layer is, for example, 50 µm.

In some embodiments, the negative active material layer includes a negative active material, a conductive agent, a binder, and a thickener, etc., a mass ratio of the negative active material, the conductive agent, the binder, and the thickener may be, for example, 90 to 96:1 to 2:1 to 3:2 to 5. Herein, the negative active material is a compound capable of intercalating-deintercalating lithium ions, for example, including at least one of graphite, soft carbon, hard carbon, artificial graphite, natural graphite, silicon, a silicon oxide compound (SiOₓ, 0<x<2), a silicon carbon compound, or lithium titanate. The conductive agent is selected from, for example, any one or more of conductive carbon black, acetylene black, Ketjen black, carbon nanotubes, and graphene, etc. The binder is, for example, selected from any one or more of polyvinylidene fluoride, polyethylene oxide, polyamide, polypropylene, polyacrylate, polyvinyl ether, polymethyl methacrylate, polyhexafluoropropylene, or polymerized styrene butadiene rubber (SBR), etc. The thickener is selected as, for example, carboxymethyl cellulose sodium (CMC-Na), etc.

In a specific embodiment, the negative active material is selected from, for example, graphite, the conductive agent is selected from, for example, acetylene black, the binder is selected from, for example, styrene-butadiene rubber, and the thickener is selected from, for example, carboxymethyl cellulose sodium. The negative active material, the conductive agent, the binder, and the thickener are mixed according to a mass ratio of 97:1:1:1, added with deionized water, and mixed uniformly under the function of a vacuum mixer, and a negative slurry is obtained. The negative slurry is then coated on copper foil, and after drying in an oven and undergoing processes such as cold pressing and slitting, a negative electrode sheet is obtained. In other embodiments, the negative electrode sheet may also be obtained by selecting any other method for forming the negative electrode sheet.

In some embodiments, the electrolyte includes electrolyte lithium salt, a solvent, and an additive. In secondary batteries, the electrolyte serves to transport ions and maintain chemical stability. Various components in the electrolyte may be classified into electrolyte lithium salt, the solvent, and the additive according to their functions and amounts. The lithium salt is mainly used to provide lithium ions to form the ion channels. In the entire electrochemical system of the battery, the directional movement of the lithium ions and electrons generates electricity. The lithium salt has a significant impact on the energy density, power density, wide electrochemical window, cycle life, and safety performance of the lithium battery. The solvent is used to dissolve the lithium salt and the additive therein. The additive, as substances added in small amounts to the electrolyte, are diverse in type and each serves different functions, for example, they can provide different improvement effects on the high- and low-temperature performance, cycle performance, and film-forming performance of the battery.

In some embodiments of the disclosure, the electrolyte lithium salt is selected from at least one of lithium hexafluorophosphate, lithium bis(fluorosulfonyl)imide, lithium bis(trifluoromethyl)sulfonylimide, lithium acetate, lithium methanesulfonate, or lithium trifluoromethanesulfonate. Further, based on a total mass of the electrolyte, a mass percentage of the electrolyte lithium salt is 12% to 16%. In the disclosure, the type of the lithium salt is not limited, and a single lithium salt or mixed lithium salts may be used.

In some embodiments, the solvent is selected from at least one of a carbonate solvent, a carboxylate solvent, an ether solvent, or a nitrile solvent, and based on the total mass of the electrolyte, the mass percentage of the solvent is 70% to 80%. Herein, the carbonate solvent is selected from, for example, ethylene carbonate, ethylene carbonate, propylene carbonate, dimethyl carbonate, diethyl carbonate, ethyl methyl carbonate, fluoroethylene carbonate, polycarbonate, etc. The carboxylate solvent is selected from, for example, ethyl formate, ethyl acetate, propyl acetate, ethyl propionate, propyl propionate, etc. The ether solvent is selected from, for example, ethylene glycol dimethyl ether, diethylene glycol diethyl ether, etc. The nitrile solvent is selected from, for example, acetonitrile, propionitrile, butyronitrile, valeronitrile, etc. In the disclosure, the type of solvent is not limited, and a single solvent or mixed solvents may be used.

In some embodiments, the additive is selected from at least one of vinylene carbonate (VC), methylene methanedisulfonate (MMDS), propylene sulfite (PS), 1,3,2-dioxathiolane 2,2-dioxide (DTD), and ethylene sulfite (ES). Further, based on the total mass of the electrolyte, a mass percentage of the additives is 0.1% to 5%. In the disclosure, the type of the additive is not limited, and a single additive or mixed additives may be used.

In some embodiments, the separator is, for example, a polyethylene (PE) film, a polypropylene (PP) film, a glass fiber film, or a composite film, etc., a thickness of the separator is, for example, 9 µm to 15 µm, an air permeability is, for example, 150 s/100 mL to 350 s/100 mL, and a porosity is, for example, 30% to 50%.

The following specific examples are given to illustrate the disclosure in detail. It should also be understood that the following examples are only used to specifically illustrate the disclosure and should not be construed as limiting the protection scope of the disclosure. Some non-essential improvements and adjustments made by a person having ordinary skill in the art based on the above contents of the disclosure all belong to the protection scope of the disclosure. The specific process parameters and the like in the following examples are only examples of suitable ranges. That is, a person having ordinary skill in the art can make a selection within a suitable range through the description herein, and are not limited to the specific numerical values exemplified below.

### Example 1

In this example, a lithium manganese iron phosphate composite positive electrode material LiMn_{0.6}Fe_{0.4}Ni_{0.03}Ti_{0.03}PO₄/C (abbreviated as Ni3Ti3-LMFP) designated as number 1 was prepared. The specific preparation method steps are as follows:
In S1, deionized water was used as a dispersion medium, and a lithium source, a manganese source, an iron source, a nickel source, a titanium source, a phosphorus source, and a carbon source were mixed uniformly using a sand mill to prepare a slurry, where in the slurry, the molar ratio of Li, Mn, Fe, Ni, Ti, and P elements was Li:Mn:Fe:Ni:Ti:P=1.05:0.6:0.4:0.03:0.03: 1, and the mass of the carbon source was 10% of the total mass of the lithium source, the manganese source, the iron source, the nickel source, the titanium source, the phosphorus source, and the carbon source.
In S2, the slurry obtained in step S1 was spray-dried, sintered at 750°C for 9 h under nitrogen atmosphere, and then the sintered product was ground and crushed to obtain the target material.

### Example 2

In this example, a lithium manganese iron phosphate composite positive electrode material LiMn_{0.6}Fe_{0.4}Ni_{0.03}Ti_{0.05}PO₄/C (abbreviated as i3Ti5-LMFP) designated as number 2 was prepared. The specific preparation method steps are as follows:
In S1, deionized water was used as a dispersion medium, and a lithium source, a manganese source, an iron source, a nickel source, a titanium source, a phosphorus source, and a carbon source were mixed uniformly using a sand mill to prepare a slurry, where in the slurry, the molar ratio of Li, Mn, Fe, Ni, Ti, and P elements was Li:Mn:Fe:Ni:Ti:P=1.05:0.6:0.4:0.03:0.05: 1, and the mass of the carbon source was 10% of the total mass of the lithium source, the manganese source, the iron source, the nickel source, the titanium source, the phosphorus source, and the carbon source.
In S2, the slurry obtained in step S1 was spray-dried, sintered at 750°C for 9 h under nitrogen atmosphere, and then the sintered product was ground and crushed to obtain the target material.

### Example 3

In this example, a lithium manganese iron phosphate composite positive electrode material LiMn_{0.6}Fe_{0.4}Ni_{0.04}Ti_{0.04}PO₄/C (abbreviated as Ni4Ti4-LMFP) designated as number 3 was prepared. The specific preparation method steps are as follows:
In S1, deionized water was used as a dispersion medium, and a lithium source, a manganese source, an iron source, a nickel source, a titanium source, a phosphorus source, and a carbon source were mixed uniformly using a sand mill to prepare a slurry, where in the slurry, the molar ratio of Li, Mn, Fe, Ni, Ti, and P elements was Li:Mn:Fe:Ni:Ti:P=1.05:0.6:0.4:0.04:0.04:1, and the mass of the carbon source was 10% of the total mass of the lithium source, the manganese source, the iron source, the nickel source, the titanium source, the phosphorus source, and the carbon source.
In S2, the slurry obtained in step S1 was spray-dried, sintered at 750°C for 9 h under nitrogen atmosphere, and then the sintered product was ground and crushed to obtain the target material.

### Example 4

In this example, a lithium manganese iron phosphate composite positive electrode material LiMn_{0.6}Fe_{0.4}Ni_{0.05}Ti_{0.03}PO₄/C (abbreviated as Ni5Ti3-LMFP) designated as number 4 was prepared. The specific preparation method steps are as follows:
In S1, deionized water was used as a dispersion medium, and a lithium source, a manganese source, an iron source, a nickel source, a titanium source, a phosphorus source, and a carbon source were mixed uniformly using a sand mill to prepare a slurry, where in the slurry, the molar ratio of Li, Mn, Fe, Ni, Ti, and P elements was Li:Mn:Fe:Ni:Ti:P=1.05:0.6:0.4:0.05:0.03:1, and the mass of the carbon source was 10% of the total mass of the lithium source, the manganese source, the iron source, the nickel source, the titanium source, the phosphorus source, and the carbon source.
In S2, the slurry obtained in step S1 was spray-dried, sintered at 750°C for 9 h under nitrogen atmosphere, and then the sintered product was ground and crushed to obtain the target material.

### Comparative Example 1

In this comparative example, a lithium manganese iron phosphate composite positive electrode material LiMn_{0.6}Fe_{0.4}PO₄/C (abbreviated as LMFP) designated as number 5 was prepared. The specific preparation method steps are as follows:
In S1, deionized water was used as a dispersion medium, and a lithium source, a manganese source, an iron source, a phosphorus source, and a carbon source were mixed uniformly using a sand mill to prepare a slurry, where in the slurry, the molar ratio of Li, Mn, Fe, and P elements was Li:Mn:Fe:P=1.05:0.6:0.4:1, and the mass of the carbon source was 10% of the total mass of the lithium source, the manganese source, the iron source, the phosphorus source, and the carbon source.
In S2, the slurry obtained in step S1 was spray-dried, sintered at 750°C for 9 h under nitrogen atmosphere, and then the sintered product was ground and crushed to obtain the target material.

### Comparative Example 2

In this comparative example, a lithium manganese iron phosphate composite positive electrode material LiMn_{0.6}Fe_{0.4}Ni_{0.08}PO₄/C (abbreviated as Ni-LMFP) designated as number 6 was prepared. The specific preparation method steps are as follows:
In S1, deionized water was used as a dispersion medium, and a lithium source, a manganese source, an iron source, a nickel source, a phosphorus source, and a carbon source were mixed uniformly using a sand mill to prepare a slurry, where in the slurry, the molar ratio of Li, Mn, Fe, Ni, and P elements was Li:Mn:Fe:Ni:P=1.05:0.6:0.4:0.08: 1, and the mass of the carbon source was 10% of the total mass of the lithium source, the manganese source, the iron source, the nickel source, the phosphorus source, and the carbon source.
In S2, the slurry obtained in step S1 was spray-dried, sintered at 750°C for 9 h under nitrogen atmosphere, and then the sintered product was ground and crushed to obtain the target material.

### Comparative Example 3

In this comparative example, a lithium manganese iron phosphate composite positive electrode material LiMn_{0.6}Fe_{0.4}Ti_{0.08}PO₄/C (abbreviated as Ti-LMFP) designated as number 7 was prepared. The specific preparation method steps are as follows:
In S1, deionized water was used as a dispersion medium, and a lithium source, a manganese source, an iron source, a titanium source, a phosphorus source, and a carbon source were mixed uniformly using a sand mill to prepare a slurry, where in the slurry, the molar ratio of Li, Mn, Fe, Ti, and P elements was Li:Mn:Fe:Ti:P=1.05:0.6:0.4:0.08:1, and the mass of the carbon source was 10% of the total mass of the lithium source, the manganese source, the iron source, the titanium source, the phosphorus source, and the carbon source.
In S2, the slurry obtained in step S1 was spray-dried, sintered at 750°C for 9 h under nitrogen atmosphere, and then the sintered product was ground and crushed to obtain the target material.

Physicochemical characterization was performed on the lithium manganese iron phosphate composite positive electrode materials with numbers 1 to 7 prepared in Examples 1 to 4 and Comparative Examples 1 to 3.

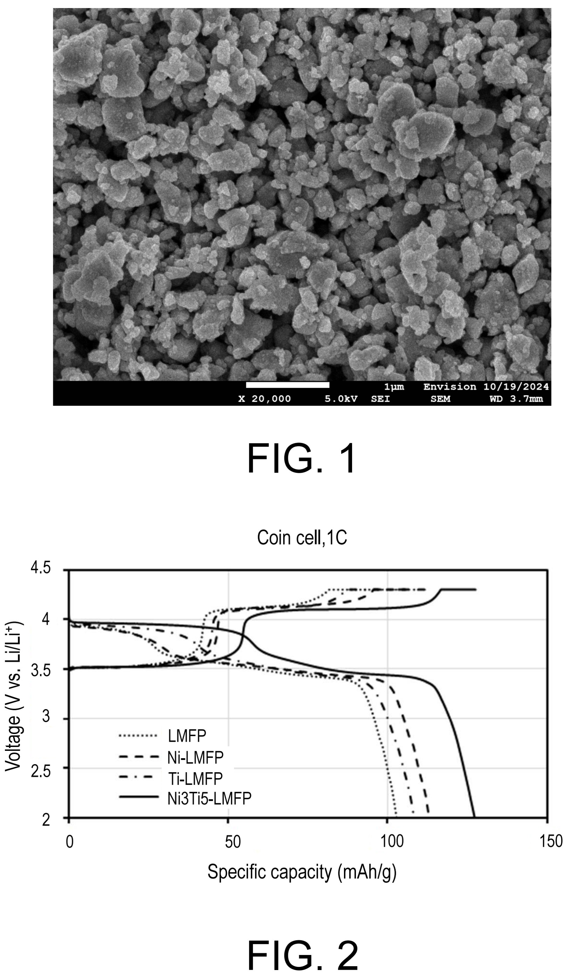

FIG. 1 shows the SEM image of LiMn_{0.6}Fe_{0.4}Ni_{0.03}Ti_{0.05}PO₄/C prepared in Example 2. From the electron microscope image, it can be seen that the Ni/Ti co-doped lithium manganese iron phosphate material is in particulate form, with the outer layer of the particles coated with a network film-like carbon layer.

The content of each metal element was detected through ICP testing to obtain the metal element ratio in the finished material. Herein, it was found that the Li element ratio was slightly lower than the feeding ratio, which may be due to the light mass of Li, causing a certain amount of lithium loss during the calcination process. Through XRD characterization, it can be known that when x<0.05, the prepared materials are all pure phases of lithium manganese iron phosphate, and no characteristic diffraction peaks of Ni-containing or Ti-containing impurities appeared, indicating that both Ni and Ti elements successfully doped into the material bulk phase. Meanwhile, the XRD results did not show characteristic peaks of graphite, indicating that the coated carbon layer exists in the form of amorphous carbon.

Using the lithium manganese iron phosphate composite positive electrode materials with numbers 1 to 7 prepared in Examples 1 to 4 and Comparative Examples 1 to 3 as positive active materials, lithium-ion batteries were prepared according to the following method and performance tests were conducted, with test results shown in Table 1 and FIG. 2.

### 1. Preparation of positive electrode sheet:

The lithium manganese iron phosphate composite positive electrode material, polyvinylidene fluoride, and conductive carbon black were mixed according to a mass ratio of 90:5:5, N-methylpyrrolidone was then added, and the mixture was stirred under a vacuum mixer until the system became uniform to obtain a positive electrode slurry. The positive electrode slurry was uniformly coated on aluminum foil with a thickness of 13 µm and then dried at room temperature and transferred to an oven for drying. After cold pressing and slitting processes, the positive electrode sheet was obtained.

### 2. Preparation of negative electrode sheet:

The negative active material graphite, conductive carbon black, sodium carboxymethyl cellulose, and styrene-butadiene rubber were mixed according to a mass ratio of 97:1:1:1, deionized water was added, and the mixture was uniformly mixed under a vacuum mixer to obtain a negative electrode slurry. The negative electrode slurry was coated on copper foil with a thickness of 13 µm and then dried at room temperature and transferred to an oven for drying. After cold pressing and slitting processes, the negative electrode sheet was obtained.

### 3. Preparation of electrolyte:

In an argon glove box with water content less than 0.1ppm and oxygen content less than 0.1ppm, ethylene carbonate, dimethyl carbonate, and ethyl methyl carbonate were mixed uniformly according to a mass ratio of 3:5:2 to obtain a mixed solvent, and then dried lithium hexafluorophosphate and additive vinylene carbonate were added to the mixed solvent and mixed uniformly to obtain electrolyte. In the obtained electrolyte, based on 100% of the total mass percentage of the electrolyte, the mass percentage of lithium hexafluorophosphate was 12.5%, the mass percentage of the mixed solvent was 84.5%, and the mass percentage of the additive was 3%.

### 4. Preparation of battery:

The positive electrode sheet, the separator (8 µm polyethylene film), and the negative electrode sheet were sequentially wound, with the separator positioned between the positive electrode sheet and the negative electrode sheet to provide isolation, and a cylindrical bare cell was obtained. Then it was placed in a cylindrical outer casing, dried in a vacuum oven, injected with the above-prepared electrolyte and sealed, and electrolyte formation was performed to obtain a lithium-ion battery.

### 5. Battery performance test:

Under normal temperature conditions, the battery cycle performance and rate performance were tested according to the following method.

Battery rate test: In an oven at 25°C, after activation for 3 cycles at 0.1C, rate cycling was performed at 1C, 2C, 3C, 5C, 7C, and 10C, and finally 0.1C charge-discharge test was performed to test battery stability.

Battery cycle performance test: In an oven at 25°C, 50 charge-discharge cycles were performed at 1C current within a specified potential range, and the discharge capacity of each cycle was recorded.

Material and battery electrochemical performance test results are shown in Table 1. In Table 1, the 10C capacity retention rate is the discharge specific capacity retention rate at 10C rate relative to 1C rate, and the 1C cycle retention rate is the percentage of discharge specific capacity after 100 cycles at 1C under 25°C conditions relative to the first cycle.

| No. | Material | Ni/Ti doping amount (mol) | Metal element ratio (mol) | | | | | 1C discharge capacity (mAh/g) | 10C capacity retention rate (%) | 1C cycle retention rate (%) |
|---|---|---|---|---|---|---|---|---|---|---|
| | | | Li | Mn | Fe | Ni | Ti | | | |
| 1 | Ni3Ti3-LMFP | Ni=Ti=0.03 | 1.046 | 0.559 | 0.374 | 0.027 | 0.026 | 120.8 | 83.6 | 93.4 |
| 2 | Ni3Ti5-LMFP | Ni=0.03 | 1.049 | 0.548 | 0.365 | 0.029 | 0.044 | 127.2 | 85.0 | 96.8 |
| | | Ti=0.05 | | | | | | | | |
| 3 | Ni4Ti4-LMFP | Ni=Ti=0.04 | 1.045 | 0.545 | 0.367 | 0.036 | 0.038 | 122.3 | 84.7 | 96.1 |
| 4 | Ni5Ti3-LMFP | Ni=0.05 | 1.047 | 0.551 | 0.366 | 0.049 | 0.028 | 120.8 | 83.6 | 95.5 |
| | | Ti=0.03 | | | | | | | | |
| 5 | LMFP | 0 | 1.048 | 0.597 | 0.398 | 0 | 0 | 102.8 | 76.3 | 85.3 |
| 6 | Ni-LMFP | Ni=0.08 | 1.047 | 0.550 | 0.369 | 0.078 | 0 | 113.0 | 81.6 | 94.7 |
| 7 | Ti-LMFP | Ti=0.08 | 1.046 | 0.547 | 0.366 | 0 | 0.077 | 108.3 | 79.4 | 91.9 |

From Table 1 and FIG. 2, the following conclusions may be analyzed:
Compared with LMFP, Ni-LMFP, and Ti-LMFP, the lithium-ion batteries prepared with materials numbered 1 to 4 as positive active materials have higher 1C discharge capacity, 10C capacity retention rate, and 1C cycle retention rate, among which the lithium-ion battery prepared with material number 2 (Ni3Ti5-LMFP) as the positive active material has the highest 1C discharge capacity, 10C capacity retention rate, and 1C cycle retention rate, with the best battery capacity and cycle stability. This indicates that compared with the single Ni doping and the single Ti doping, the Ni+Ti co-doping strategy is more beneficial to improving the capacity and cycle stability of lithium manganese iron phosphate batteries, and the main reasons are as follows. The Ni+Ti co-doping strategy can more effectively address the problems of energy density and capacity decay of the lithium manganese iron phosphate positive electrode materials, so that lithium manganese iron phosphate is enabled to better exert its advantages of high energy density, enhanced safety, and low costs, and the capacity and cycle stability of the lithium manganese iron phosphate batteries are thus improved.

Comparing the electrochemical performance of the lithium-ion batteries prepared with the materials numbered 2 to 4 as the positive active materials, it is found that the 1C discharge capacity, 10C capacity retention rate, and 1C cycle retention rate of the batteries increase with the increase of the Ti doping amount. This indicates that under the premise of the same Ni+Ti doping amount, a higher Ti doping amount has more advantages in capacity performance and is more beneficial to improving the capacity and cycle stability of the lithium manganese iron phosphate batteries.

## Claims

1. A lithium manganese iron phosphate composite positive electrode material, comprising a component A and a component B,
wherein the component A is a Ni/Ti co-doped lithium manganese iron phosphate material, and a chemical formula of the Ni/Ti co-doped lithium manganese iron phosphate material is LiMn_{0.6(1-x-y)}Fe_{0.4(1-x-y)}NiₓTi_{y}PO₄, where 0≤x≤0.05 and 0≤y≤0.05, and
the component B comprises amorphous carbon.

2. The lithium manganese iron phosphate composite positive electrode material according to claim 1, wherein in the Ni/Ti co-doped lithium manganese iron phosphate material, a ratio of a sum of molar contents of Ni and Ti elements to a sum of molar contents of Mn and Fe is 0.06 to 0.08:0.92 to 0.94.

3. The lithium manganese iron phosphate composite positive electrode material according to claim 1 or 2, wherein in the Ni/Ti co-doped lithium manganese iron phosphate material, a molar ratio of Ni to Ti elements is 1:1 to 1.6.

4. The lithium manganese iron phosphate composite positive electrode material according to claim 1, wherein the component B forms a network-like thin film coating the component A, and/or,
a mass percentage of the component B in the lithium manganese iron phosphate composite positive electrode material is 1% to 2.5%.

5. A method for preparing a lithium manganese iron phosphate composite positive electrode material, comprising:
mixing a lithium source, a manganese source, an iron source, a nickel source, a titanium source, a phosphorus source, and a carbon source to form a slurry, wherein in the slurry, a molar ratio of Li, Mn, Fe, Ni, Ti, and P elements is Li:Mn:Fe:Ni:Ti:P = 1.05:0.6(1-x-y):0.4(1-x-y):x:y:1; and
drying and sintering the slurry to obtain the lithium manganese iron phosphate composite positive electrode material.

6. The method for preparing the lithium manganese iron phosphate composite positive electrode material according to claim 5, wherein in the slurry, a mass of the carbon source is 8% to 12% of a total mass of the lithium source, the manganese source, the iron source, the nickel source, the titanium source, the phosphorus source, and the carbon source.

7. The method for preparing the lithium manganese iron phosphate composite positive electrode material according to claim 5 or 6, wherein the lithium source is selected from at least one of lithium carbonate, lithium hydroxide, lithium acetate, or lithium dihydrogen phosphate,
the manganese source is selected from at least one of manganese oxalate, manganese carbonate, trimanganese tetroxide, manganese phosphate, manganese monoxide, or ammonium manganese phosphate,
the iron source is selected from at least one of ferrous oxalate, ferrous pyrophosphate, iron phosphate, ferric oxide, or metallic iron,
the nickel source is selected from at least one of nickel oxide, nickel hydroxide, or trinickel tetroxide,
the titanium source is selected from at least one of titanium dioxide, butyl titanate, or metatitanic acid,
the phosphorus source is selected from at least one of iron phosphate, ammonium dihydrogen phosphate, lithium phosphate, or lithium dihydrogen phosphate, and/or
the carbon source is selected from at least one of glucose, polyethylene glycol, sucrose, citric acid, or graphite.

8. The method for preparing the lithium manganese iron phosphate composite positive electrode material according to claim 5, wherein the sintering is performed under a protective gas atmosphere, a sintering temperature is 650°C to 850°C, and sintering time is 6 h to 12 h.

9. A positive electrode sheet, comprising a positive current collector and a positive active material layer at least on one side of the positive current collector, wherein the positive active material layer comprises a positive active material, and the positive active material comprises the lithium manganese iron phosphate composite positive electrode material according to any one of claims 1 to 4 and/or the lithium manganese iron phosphate composite positive electrode material prepared by the method according to any one of claims 5 to 8.

10. A secondary battery, comprising the positive electrode sheet according to claim 9.
